# EUROPEAN PATENT APPLICATION

(11) **EP 2 903 295 A1**
(43) Date of publication of application: **05.08.2015**
(21) Application number: 13840834.9
(22) Date of filing: 20.09.2013
(51) Int. Cl.: H04Q 9/00

(54) **COMMUNICATION SYSTEM, COMMUNICATION APPARATUS, RELAY APPARATUS AND PROGRAM**

(30) Priority: 28.09.2012 JP 2012217606
(71) Applicant: Panasonic Intellectual Property Management Co., Ltd., Osaka-shi, Osaka 540-6207 (JP)
(72) Inventor: SASAKI, Takayuki, Osaka-shi, Osaka 540-6207 (JP); KUNIYOSHI, Kenji, Osaka-shi, Osaka 540-6207 (JP)
(74) Representative: Appelt, Christian W.
(86) International application number: PCT/JP2013/005552
(87) International publication number: WO 2014/050042

(57) **Abstract**

A communication system includes a plurality of slaves each configured to acquire meter reading data that represents a consumption amount, by a customer facility, of a supply medium supplied from a supplier, and a master configured to acquire the meter reading data from each of the plurality of slaves by wired communication. Also, the communication system includes a portable terminal device (maintenance terminal) configured to transmit or receive data with at least a first communication device among a plurality of communication devices (the plurality of slaves and the master). In a case where the portable terminal device and the first communication device transmit or receive data, a second communication device that is different from the first communication device among the plurality of communication devices is configured to relay the data that is transmitted or received between the portable terminal device and the first communication device, by communicating with the first communication device using a wired communication network established between the plurality of communication devices, and by communicating with the portable terminal device wirelessly. Accordingly, the second communication device relays the data between the portable terminal device and the first communication device.

## Description

### TECHNICAL FIELD

This invention relates to a communication system, a communication device, a relay device, and a program that are used for carrying out remote meter reading of an amount of electric power 10 consumed by a customer facility.

### BACKGROUND ART

Conventionally, remote meter reading systems are known in which remote meter reading of an amount of electric power consumed by a customer facility is carried out. For example, a remote meter reading system that includes a communication device (slave) that is connected to a power meter in a customer facility, and a master configured to collect meter reading data representing an amount of electric power consumed by the customer facility from the slave is disclosed in JP 2010-157983A (hereinafter referred to as "Document 1"). In the remote meter reading system described in Document 1, power line communication (PLC) is used for communication between the master and the slave. Using power line communication makes it possible to reduce installation workload, since the power supply path for supplying electric power to the customer facility is also used as a communication path.

Incidentally, in the remote meter reading system described in Document 1, a maintenance terminal is used when a meter reader acquires meter reading data from a slave on site. Accordingly, in the case where a master cannot acquire meter reading data from a slave, the meter reader can carry out on-site meter reading using the maintenance terminal. On-site meter reading involves the maintenance terminal communicating with a slave of the customer facility from nearby the customer facility and acquiring meter reading data from the slave.

In the remote meter reading system described in Document 1, the maintenance terminal performs power line communication with slaves, in on-site meter reading in which the maintenance terminal is used, and meter reading data can be acquired not only from a slave that communicates directly with the maintenance terminal but also from a slave other than that slave.

However, in the conventional system described in Document 1, the maintenance terminal and a slave need to be connected with a power line in order for the maintenance terminal to acquire meter reading data from the slave, in on-site meter reading in which the maintenance terminal is used. Therefore, a meter reader needs to go to the vicinity of the slave, and perform an operation to connect the maintenance terminal with the slave, requiring time and effort. For example, in a case of an apartment building that is equipped with a self-locking system, procedures or the like for the meter reader to gain entry to the apartment building are required in order to carry out on-site meter reading.

### SUMMARY OF INVENTION

The present invention has been made in view of the above-described problems, and an object of the present invention is to provide a communication system, a communication device, a relay device, and a program for performing transmission or reception of data efficiently without going to the vicinity of a communication device.

A communication system according to the present invention includes: a plurality of slaves each configured to acquire meter reading data that represents a consumption amount, by a customer facility, of a supply medium supplied from a supplier; a master configured to acquire the meter reading data from each of the plurality of slaves by wired communication; and a portable terminal device configured to transmit or receive data with at least a first communication device among a plurality of communication devices including the plurality of slaves and the master. In a case where the portable terminal device and the first communication device transmit or receive data, a second communication device that is different from the first communication device among the plurality of communication devices is configured to relay the data that is transmitted or received between the portable terminal device and the first communication device, by communicating with the first communication device using a wired communication network established between the plurality of communication devices, and by communicating with the portable terminal device wirelessly.

A communication system according to the present invention includes: a plurality of slaves each configured to acquire meter reading data that represents a consumption amount, by a customer facility, of a supply medium supplied from a supplier; a master configured to acquire the meter reading data from each of the plurality of slaves by wired communication; a portable terminal device configured to transmit or receive data with at least one target device among a plurality of communication devices including the plurality of slaves and the master; and a relay device configured to relay the data that is transmitted or received between the portable terminal device and the target device by wireless communication.

Preferably, in the communication system, the relay device is integrally provided to another communication device that is different from the target device.

Preferably, in the communication system, the relay device is configured to acquire data from the target device on a regular basis and hold the data, and, upon receiving a request of acquiring the data from the portable terminal device, transmit the held data to the portable terminal device.

Preferably, in the communication system, the supply medium is electric power.

Preferably, in the communication system, each of the plurality of slaves constitutes a power meter with a measurement device configured to measure an electric power consumption amount by the customer facility.

A communication device according to the present invention is used as any of the plurality of communication devices in the communication system.

A relay device according to the present invention is used in the communication system.

A program according to the present invention is a program for a computer that, in a communication system including a plurality of slaves each configured to acquire meter reading data that represents a consumption amount, by a customer facility, of a supply medium supplied from a supplier; a master configured to acquire the meter reading data from each of the plurality of slaves by wired communication; and a portable terminal device configured to transmit or receive data with at least a first communication device among a plurality of communication devices including the plurality of slaves and the master, is used as a second communication device that is different from the first communication device among the plurality of communication devices. The program causes the computer to function as, in a case where the portable terminal device and the first communication device transmit or receive data, a means for relaying data that is transmitted or received between the portable terminal device and the first communication device, by communicating with the first communication device using a wired communication network established between the plurality of communication devices, and by communicating with the portable terminal device wirelessly. The present invention is not limited to the program, and may be a computer-readable recording medium in which the above program is recorded.

A program according to the present invention is a program for a computer that is used in a communication system including: a plurality of slaves each configured to acquire meter reading data that represents a consumption amount, by a customer facility, of a supply medium supplied from a supplier; a master configured to acquire the meter reading data from each of the plurality of slaves by wired communication; and a portable terminal device configured to transmit or receive data with at least one target device among a plurality of communication devices including the plurality of slaves and the master. The program causes the computer to function as means for relaying the data that is transmitted or received between the portable terminal device and the target device by wireless communication. The present invention is not limited to the program, and may be a computer-readable recording medium in which the above program is recorded.

In the present invention, the portable terminal device and a target communication device can transmit or receive data as a result of the data being relayed by a device that is able to communicate directly with the portable terminal device. Accordingly, compared with a case where the data is relayed by a device that performs wired communication with the portable terminal device, an operation from the portable terminal device with respect to the target communication device, that is, transmission or reception of data can be efficiently performed without going to the vicinity of the target communication device.

### BRIEF DESCRIPTION OF DRAWINGS

Preferred embodiments of the present invention will now be described in further details. Other features and advantages of the present invention will become better understood with regard to the following detailed description and accompanying drawings where:
FIG. 1 is a block diagram illustrating a configuration of a communication system according to Embodiment 1;
FIG. 2 is a block diagram illustrating a configuration of a maintenance terminal;
FIG. 3 is a block diagram illustrating a configuration of a slave;
FIG. 4 is a block diagram illustrating a configuration of a master;
FIG. 5 is a diagram illustrating operations of the communication system according to Embodiment 1;
FIG. 6 is a block diagram illustrating a configuration of a communication system according to Embodiment 2;
FIG. 7 is a block diagram illustrating a configuration of a relay device;
FIG. 8 is a diagram illustrating operations of the communication system according to Embodiment 2;
FIG. 9 is a block diagram illustrating a configuration of a communication system according to Embodiment 3;
FIG. 10 is a diagram illustrating operations of the communication system according to Embodiment 3; and
FIG. 11 is a diagram illustrating operations of the communication system according to Embodiment 4.

### DESCRIPTION OF EMBODIMENTS

### Embodiment 1

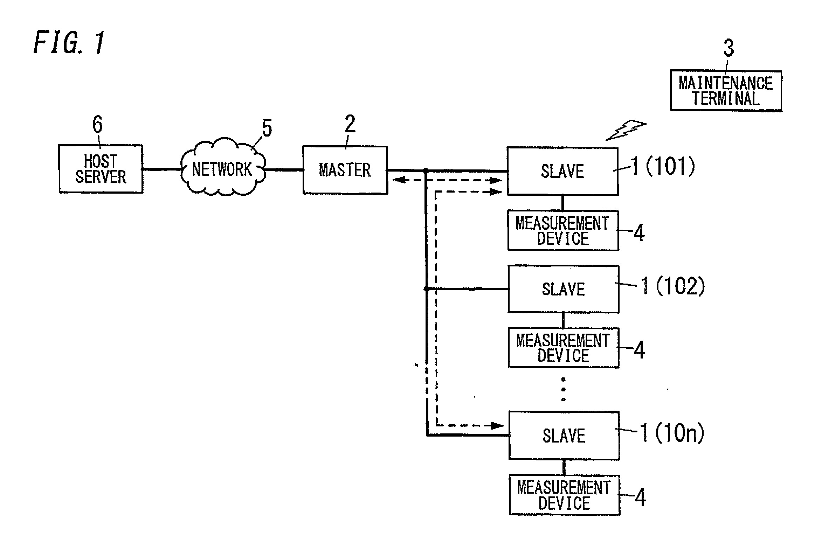

A communication system according to Embodiment 1 includes a plurality of slaves 1 (101), 1 (102), ..., 1 (10n), a master 2, and a maintenance terminal 3, as shown in FIG. 1.

The plurality of slaves 1 (10k) (k=1, 2, ..., n) are installed in respective customer facilities that are different from each other. The slave 1 acquires meter reading data from a measurement device 4 that is installed in the same customer facility as the slave 1. The meter reading data is data representing a consumption amount, by the customer facility, of a supply medium supplied from a supplier. The measurement device 4 measures a consumption amount of the supply medium in order for the supplier to charge a utility rate of the supply medium to the customer.

The master 2 performs wired communication with each slave 1, and transmits or receives data with each slave 1. Specifically, the master 2 acquires meter reading data from each slave 1 by wired communication. The wired communication used by the master 2 for acquiring meter reading data from each slave 1 is power line communication (PLC) or the like, for example. Also, the master 2 is connected to a host server 6 via a network 5 such as a public network, for example.

In the present embodiment, the slaves 1 and the master 2 are referred to as communication devices, when the slaves 1 and the master 2 are not distinguished from each other. That is, the plurality of communication devices include the plurality of slaves 1 (10k) (k=1, 2, ..., n) and the master 2. The plurality of slaves 1 (10k), the master 2, and the host server 6 constitute a remote meter reading system for carrying out remote meter reading with respect to an amount of electric power consumed by each customer facility. In the remote meter reading system, the plurality of communication devices transmit or receive data with multi-hop communication. Multi-hop communication is communication in which, when communication is performed between two or more communication devices, communication between two communication devices, one of which is a transmission source and the other is a transmission destination, is enabled as a result of another communication device that is different from the two communication devices relaying the data. That is, in the remote meter reading system, communication between the master 2 and each slave 1 is directly or indirectly performed, and a slave 1 that cannot communicate directly with the master 2 communicates with the master 2 as a result of other slaves 1 that are within a communication range relaying data in succession. In the case of a slave 1 that cannot communicate directly with the master 2, the communication route between the slave 1 and the master 2 is determined, among a plurality of candidates, taking into consideration factors such as quality of communication between slaves 1 that communicate directly with each other.

The maintenance terminal 3 is a portable terminal device that is carried by a meter reader (person) who carries out meter reading with respect to an amount of a supply medium consumed by a customer facility. The maintenance terminal 3 includes a function of communicating with a slave 1 of a customer facility from the vicinity of the customer facility, and can transmit or receive data with the slave 1. Also, the maintenance terminal 3 includes a function of communicating with the master 2, and can transmit or receive data with the master 2.

The data that is transmitted or received between the maintenance terminal 3 and the slave 1 or the master 2 is meter reading data, maintenance data, or the like, for example.

The meter reading data is data that represents a consumption amount, by a customer facility, of a supply medium supplied from a supplier. The supply medium includes electric power, gas, water, or the like, for example. In the case where the supply medium is electric power, the supplier is an electric power provider, and the meter reading data is an amount of electric power consumed by a customer facility. In the case where the supply medium is gas, the supplier is a gas provider, and the meter reading data is an amount of gas consumed by a customer facility. In the case where the supply medium is water, the supplier is a water department, and the meter reading data is an amount of water consumed by a customer facility.

Maintenance data is data for maintenance, setting, and operations of the communication devices (slave 1, master 2). Maintenance data includes setting values set in a communication device, firmware, and the like, for example.

Hereinafter, a case where the supply medium is electric power, and the wired communication used when the master 2 acquires meter reading data from the slaves 1 is power line communication will be described.

The measurement device 4 is inserted in a power supply path from an electric power provider to a customer facility side, in order for the electric power provider to charge electricity rates to the customer, and measures an amount of electric power consumed by an electric power load (not shown) installed in the customer facility. Specifically, the measurement device 4 measures instantaneous electric power, and calculates, by time slot, the electric power consumption amount by integrating the instantaneous electric power. Also, a slave 1 and a measurement device 4 that are installed in the same customer facility constitute a power meter. That is, the power meter is a power meter having a communication function, i.e. a smart meter.

The electric power load is a power supply facility, a load apparatus, or the like, for example. The power supply facility includes a solar power generation facility (power conditioner), an electric storage facility (charge and discharge controller), or the like, for example. The load apparatus includes an electric apparatus that operates by consuming electric power, for example. The power supply facility, the load apparatus, and a management device configured to manage the facility and the apparatus constitute a HEMS (Home Energy Management System) network in each customer facility.

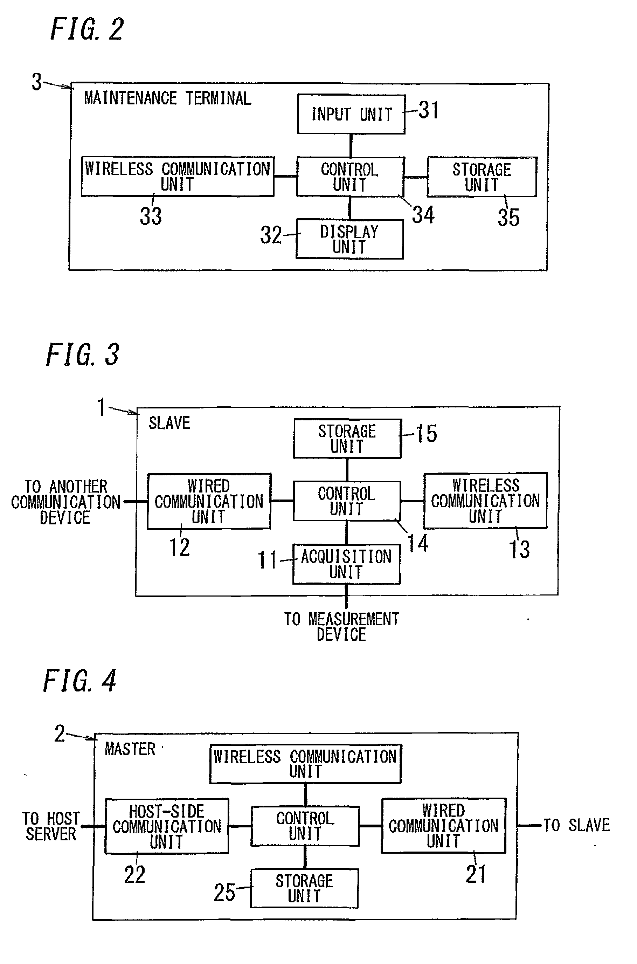

Next, a configuration of the maintenance terminal 3 will be described. The maintenance terminal 3 communicates wirelessly with a communication device (slave 1, master 2), and acquires meter reading data from the communication device. The maintenance terminal 3 includes an input unit 31, a display unit 32, a wireless communication unit 33, a control unit 34, and a storage unit 35, as shown in FIG. 2. The maintenance terminal 3 includes a computer (including microcomputer) on which a CPU (Central Processing Unit) and a memory are mounted as a main constituent element.

The input unit 31 is provided for performing operations on the maintenance terminal 3. Specifically, a meter reader (person) operates the input unit 31 when wireless communication between the maintenance terminal 3 and a communication device (slave 1, master 2) is started. An input content is outputted from the input unit 31 to the control unit 34.

The display unit 32 is a liquid crystal display, an organic EL (Electro Luminescence) display, or the like, for example, and displays various information according to instructions from the control unit 34.

The wireless communication unit 33 transmits or receives data with a communication device by wireless communication according to instructions from the control unit 34. A 900MHz specific small power radio system, Bluetooth (registered trademark), or the like, for example, is used in the wireless communication.

The control unit 34 includes a CPU mounted on the computer as a main constituent element, and controls the units of the maintenance terminal 3 and executes functions of the maintenance terminal 3 by operating according to a program stored in the storage unit 35. Specifically, in the case of acquiring meter reading data from a first communication device among a plurality of communication devices, the control unit 34 transmits, from a place where communication with a second communication device that is different from the first communication device is possible, a data acquisition request for the meter reading data of the first communication device to the second communication device. That is, the control unit 34 controls the wireless communication unit 33 to transmit a data acquisition request signal (data acquisition request command) addressed to the first communication device to the second communication device by wireless communication.

The storage unit 35 stores the meter reading data received by the wireless communication unit 33. Also, the storage unit 35 stores information of a specific channel used for wireless communication between the maintenance terminal 3 and the communication device. Note that, the storage unit 35 stores various information other than above.

Also, the storage unit 35 stores a program for causing the maintenance terminal (computer) 3 to execute various functions. That is, the storage unit 35 stores a program for causing the maintenance terminal 3 to function as the input unit 31, the display unit 32, the wireless communication unit 33, the control unit 34, and the storage unit 35. The program is pre-stored in the storage unit 35 at the time of shipment of the maintenance terminal 3. Note that, in the case where the maintenance terminal 3 acquires the program after shipment, an example of a method for the maintenance terminal 3 to acquire the program is to use a computer readable recording medium on which the program is recorded. Also, another method for the maintenance terminal 3 to acquire the program is to download the program from another device (server, for example) using a network.

Next, a configuration of the slave 1 will be described. The slave 1 includes an acquisition unit 11, a wired communication unit 12, a wireless communication unit 13, a control unit 14, and a storage unit 15, as shown in FIG. 3. The slave 1 includes a computer (including microcomputer) on which a CPU and a memory are mounted as a main constituent element.

First, functions of the units of the slave 1 when the master 2 (refer to FIG. 1) carries out remote meter reading for collecting meter reading data from the slaves 1 will be described.

The acquisition unit 11 acquires meter reading data from the measurement device 4 (refer to FIG. 1) at a predetermined time interval (30 minutes, for example). The meter reading data acquired by the acquisition unit 11 is stored in the storage unit 15.

The wired communication unit 12 performs power line communication with a communication device other than the slave 1 itself using a power line communication network established between a plurality of communication devices (the plurality of slaves 1 and the master 2), according to an instruction of the control unit 14. Specifically, the wired communication unit 12 transmits meter reading data stored in the storage unit 15, that is, meter reading data acquired by the acquisition unit 11, to another slave 1 or the master 2, or relays meter reading data of another slave 1.

The control unit 14 includes a CPU mounted on the computer as a main constituent element, and controls the units of the slave 1 and executes functions of the slave 1 by operating according to a program stored in the storage unit 15. Specifically, the control unit 14 controls the acquisition unit 11 to acquire meter reading data from the measurement device 4, and stores the meter reading data in the storage unit 15. Also, the control unit 14 controls the wired communication unit 12 to transmit meter reading data stored in the storage unit 15 to the master 2. The meter reading data is transmitted to the master 2 directly or by multi-hop communication via a host-side slave 1.

The storage unit 15 stores meter reading data acquired by the acquisition unit 11. Note that the storage unit 15 stores various data other than the meter reading data.

Also, the storage unit 15 stores a program for causing the slave (computer) 1 to execute various functions. That is, the storage unit 15 stores a program for causing the slave 1 to function as the acquisition unit 11, the wired communication unit 12, the wireless communication unit 13, the control unit 14, and the storage unit 15. The program is pre-stored in the storage unit 15 at the time of shipment of the slave 1. Note that, in the case where the slave 1 acquires the program after shipment, an example of a method for the slave 1 to acquire the program is to use a computer readable recording medium on which the program is recorded. Also, another method for the slave 1 to acquire the program is to download the program from another device (server, for example) using a network.

Next, functions of the units of the slave 1 when data is transmitted or received between the maintenance terminal 3 (refer to FIG. 1) and the slave 1 will be described.

The wired communication unit 12, upon the wireless communication unit 13 receiving a data acquisition request signal addressed to another communication device from the maintenance terminal 3, transmits a data acquisition request signal addressed to the other communication device using power lines provided between the plurality of communication devices. Also, the wired communication unit 12 receives a data acquisition request signal addressed to the slave 1 itself from another communication device. The wired communication unit 12, upon receiving the data acquisition request signal, transmits a data acquisition response signal (data acquisition response command) that includes meter reading data acquired by the acquisition unit 11 to another communication device that sent the request.

The wireless communication unit 13 communicates wirelessly with the maintenance terminal 3 (refer to FIG. 1). Specifically, the wireless communication unit 13 receives a data acquisition request signal addressed to another communication device from the maintenance terminal 3 by wireless communication. Also, the wireless communication unit 13, upon the wired communication unit 12 receiving a data acquisition response signal that includes the meter reading data of another communication device from the other communication device, transmits a data acquisition response signal that includes the meter reading data to the maintenance terminal 3 by wireless communication.

The control unit 14 relays the meter reading data that is transmitted or received between the maintenance terminal 3 and another communication device (first communication device) using the wired communication unit 12 and the wireless communication unit 13. The control unit 14, upon receiving a data acquisition request addressed to another communication device from the maintenance terminal 3, transmits a data acquisition request to the other communication device. That is, when the wireless communication unit 13 receives a data acquisition request signal addressed to the other communication device from the maintenance terminal 3, the control unit 14 controls the wired communication unit 12 to transmit a data acquisition request signal addressed to the other communication device.

Next, a configuration of the master 2 shown in FIG. 1 will be described. The master 2 acquires meter reading data from each slave 1 using a power line communication path constituted between the master 2 and the plurality of slaves 1 (10k) (k=1, 2, ..., n). The master 2 includes a wired communication unit 21, a host-side communication unit 22, a wireless communication unit 23, a control unit 24, and a storage unit 25, as shown in FIG. 4.

First, functions of the units of the master 2 when the master 2 carries out remote meter reading for collecting meter reading data from each slave 1 (refer to FIG. 1) will be described.

The wired communication unit 21 communicates with each slave 1 using the power line communication network established between the plurality of communication devices (the plurality of slaves 1 and the master 2). Specifically, the wired communication unit 21 receives meter reading data from each slave 1.

The host-side communication unit 22 includes a function of communicating with the host server 6(refer to FIG. 1). The host-side communication unit 22 transmits meter reading data of each slave 1 to the host server 6. The host server 6 can acquire the meter reading data of each slave 1 from the master 2. Note that the host server 6 can also acquire data other than the meter reading data from the master 2.

The control unit 24 includes a CPU mounted on the computer as a main constituent element, and controls the units of the master 2 and executes functions of the master 2 by operating according to a program stored in the storage unit 25. Specifically, the control unit 24 transmits data acquisition requests, by polling, to the plurality of slaves 1 (10k) (k=1 , 2, ..., n) at a start time of regular remote meter reading. That is, the control unit 24 controls the wired communication unit 21 to transmit data acquisition request signals to the plurality of slaves 1(10k) in succession. Then, the control unit 24 receives data acquisition responses including respective meter reading data from all the slaves 1 (10k). The control unit 24 extracts the meter reading data from each received data acquisition response, and stores the meter reading data in the storage unit 25. Also, the control unit 24 controls the host-side communication unit 22 to transmit the meter reading data stored in the storage unit 25 in the host server 6.

The storage unit 25 stores the meter reading data collected from the slaves 1. Note that the storage unit 25 stores various data other than the meter reading data.

Also, the storage unit 25 stores a program for causing the master (computer) 2 to execute various functions. That is, the storage unit 25 stores a program for causing the master 2 to function as the wired communication unit 21, the host-side communication unit 22, the wireless communication unit 23, the control unit 24, and the storage unit 25. The program is pre-stored in the storage unit 25 at the time of shipment of the master 2. Note that, in the case where the master 2 acquires the program after shipment, an example of a method for the master 2 to acquire the program is to use a computer readable recording medium on which the program is recorded. Also, another method for the master 2 to acquire the program is to download the program from another device (server, for example) using a network.

Next, functions of the units of the master 2 when data is transmitted or received between the maintenance terminal 3 (refer to FIG. 1) and the master 2 will be described.

The wired communication unit 21, upon the wireless communication unit 23 receiving a data acquisition request signal addressed to another communication device from the maintenance terminal 3, transmits a data acquisition request signal to the other communication device. Also, the wired communication unit 21 receives a data acquisition request signal addressed to the master 2 from another communication device. The wired communication unit 21, upon receiving the data acquisition request signal, transmits a data acquisition response signal that includes meter reading data stored in the storage unit 25 to another communication device that sent the request.

The wireless communication unit 23 communicates wirelessly with the maintenance terminal 3. Specifically, the wireless communication unit 23 receives a data acquisition request signal addressed to another communication device from the maintenance terminal 3 by wireless communication. Also, the wireless communication unit 23, upon the wired communication unit 21 receiving a data acquisition response signal that includes the meter reading data of another communication device from the other communication device, transmits a data acquisition response signal that includes the meter reading data to the maintenance terminal 3 by wireless communication.

The control unit 24 relays the meter reading data that is transmitted or received between the maintenance terminal 3 and another communication device (first communication device) using the wired communication unit 21 and the wireless communication unit 23. The control unit 24, upon receiving a data acquisition request to another communication device from the maintenance terminal 3, transmits a data acquisition request to the other communication device. That is, when the wireless communication unit 23 receives a data acquisition request signal addressed to the other communication device from the maintenance terminal 3, the control unit 24 controls the wired communication unit 21 to transmit a data acquisition request signal addressed to the other communication device.

In the communication system described above, in the case where meter reading data is transmitted or received between the maintenance terminal 3 and a first communication device among the plurality of communication devices (the plurality of slaves 1 and the master 2), a second communication device that is different from the first communication device performs power line communication with the first communication device, and performs wireless communication with the maintenance terminal 3. Accordingly, the second communication device relays data that is transmitted or received between the maintenance terminal 3 and the first communication device.

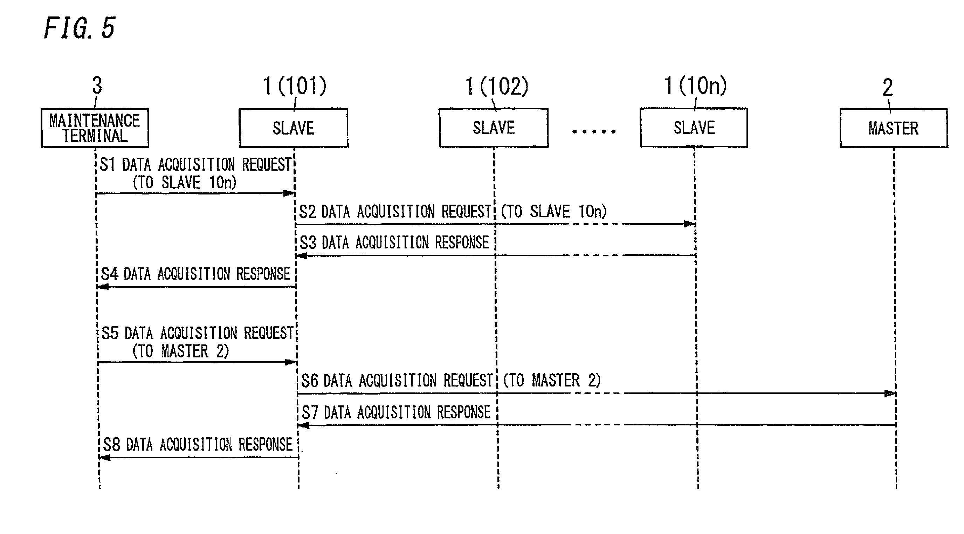

Next, meter reading operations by the maintenance terminal 3 in the communication system according to the present embodiment will be described with reference to FIG. 5. Here, the maintenance terminal 3 has been carried to a place where the maintenance terminal 3 cannot communicate directly with a slave 10n but can communicate directly with a slave 101. Communication between the maintenance terminal 3 and the slave 101 has already been established.

First, in order to acquire the meter reading data of the slave 10n, the maintenance terminal 3 transmits, to the slave 101, a data acquisition request to the slave 10n by wireless communication (S1). The slave 101, upon receiving the data acquisition request to the slave 10n from the maintenance terminal 3, transmits a data acquisition request to the slave 10n by power line communication (S2). The slave 10n, upon receiving the data acquisition request from the slave 101, transmits a data acquisition response including meter reading data of the slave 10n to the slave 101 by power line communication (S3). The slave 101, upon receiving the data acquisition response from the slave 10n, transmits a data acquisition response including meter reading data of the slave 10n to the maintenance terminal 3 by wireless communication (S4). Accordingly, an operation of acquiring meter reading data with respect to the slave 10n that cannot communicate directly with the maintenance terminal 3 can be realized.

Also, acquisition of meter reading data with respect to the master 2 can be realized, as described below, with a similar method that is used in the case of acquiring the meter reading data of the slave 10n.

First, in order to acquire meter reading data held in the master 2, the maintenance terminal 3 transmits, to the slave 101, a data acquisition request to the master 2 by wireless communication (S5). The slave 101, upon receiving the data acquisition request to the master 2 from the maintenance terminal 3, transmits a data acquisition request to the master 2 by power line communication (S6). The master 2, upon receiving the data acquisition request from the slave 101, transmits a data acquisition response including meter reading data held by the master 2 to the slave 101 by power line communication (S7). The slave 101, upon receiving the data acquisition response from the master 2, transmits a data acquisition response including the meter reading data of the master 2 to the maintenance terminal 3 by wireless communication (S8).

Note that an operation of acquiring maintenance data with respect to the slaves 1 and the master 2 is similar to the operation in the case of acquiring the meter reading data. Also, an operation of transmitting maintenance data from the maintenance terminal 3 to the slaves 1 and the master 2 is similar to the operation in the case of acquiring the meter reading data.

The communication system according to the present embodiment described above includes the plurality of slaves 1, the master 2, and the portable terminal device (maintenance terminal 3). The plurality of slaves 1 each acquire meter reading data. The meter reading data represents a consumption amount, by a customer facility, of a supply medium supplied by a supplier. The master 2 acquires meter reading data from each of the plurality of slaves 1 by wired communication. The portable terminal device transmits or receives data with at least a first communication device among a plurality of communication devices. The plurality of communication devices are the plurality of slaves 1 and the master 2. In the case where data is transmitted or received between the portable terminal device and the first communication device, a second communication device that is different from the first communication device among the plurality of communication devices communicates with the first communication device using a wired communication network established between the plurality of communication devices, and communicates wirelessly with the portable terminal device. Accordingly, the second communication device relays data that is transmitted or received between the portable terminal device and the first communication device.

The communication device according to the present embodiment is used as one of the plurality of communication devices in the communication system according to the present embodiment.

A relay device according to the present embodiment is used in the communication system according to the present embodiment.

The program according to the present embodiment is, in the communication system that includes the plurality of slaves 1, the master 2, and the portable terminal device (maintenance terminal 3) configured to transmit or receive data with at least a first communication device among the plurality of communication devices, a program for causing a computer to function as means described below, the computer being used as a second communication device that is different from the first communication device among the plurality of communication devices. The plurality of communication devices are the plurality of slaves 1 and the master 2. The plurality of slaves 1 each acquire meter reading data. The meter reading data represents a consumption amount, by a customer facility, of a supply medium supplied from a supplier. The master 2 acquires meter reading data from each of the plurality of slaves 1 by wired communication. In the case where data is transmitted or received between the portable terminal device and the first communication device, the means performs communication with the first communication device using the wired communication network established between the plurality of communication devices, and communicates wirelessly with the portable terminal device. Accordingly, the means relays data that is transmitted or received between the portable terminal device and the first communication device.

In the present embodiment, as described above, the maintenance terminal 3 and the first communication device can transmit or receive data as a result of the second communication device relaying the data, the second communication device being capable of performing wireless communication directly with the maintenance terminal (portable terminal device) 3. Accordingly, compared with a case where a device that performs wired communication with the maintenance terminal 3 relays data, an operation from the maintenance terminal 3 with respect to a first communication device, that is, transmission or reception of data can be efficiently performed without going to the vicinity of the first communication device. That is, according to the present embodiment, a person who is carrying the maintenance terminal 3 with them can perform operations without going to the vicinity of the first communication device and as a result the efficiency of the operations can be improved. For example, since the maintenance terminal 3 can acquire the meter reading data of the first communication device as a result of the second communication device that can communicate directly with the maintenance terminal 3 relaying the data, the operation of acquiring meter reading data can be efficiently performed.

The supply medium is preferably electric power, as in the case of the communication system according to the present embodiment.

Each of the plurality of slaves 1 preferably constitutes a power meter together with the measurement device 4 configured to measure an amount of electric power consumed by a customer facility, as in the case of the communication system according to the present embodiment.

Note that the slave 101 shown in FIG. 1 can transmit or receive data with the slave 10n by performing multi-hop communication via another slave 1 in the case where the slave 101 cannot communicate directly with the slave 10n. Similarly, the slave 101 can transmit or receive data with the master 2 by performing multi-hop communication via another slave 1 in the case where the slave 101 cannot communicate directly with the master 2.

### Embodiment 2

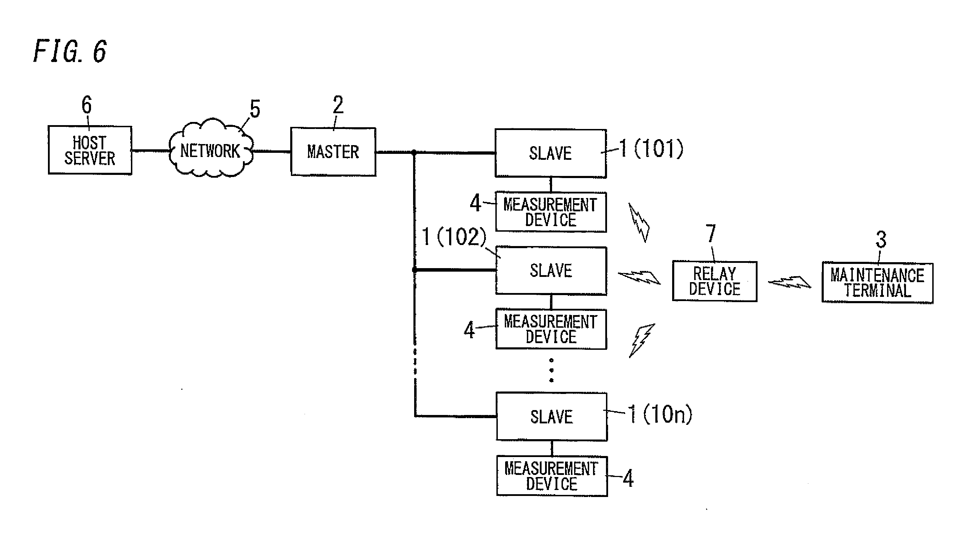

A communication system according to Embodiment 2 differs from the communication system according to Embodiment 1 (refer to FIG. 1) in that a relay device 7 configured to relay the data that is transmitted or received between a maintenance terminal 3 and a communication device (slave 1, master 2) is included, as shown in FIG. 6. Note that constituent elements similar to those in the communication system according to Embodiment 1 are provided with the same reference numerals, and description thereof will be omitted.

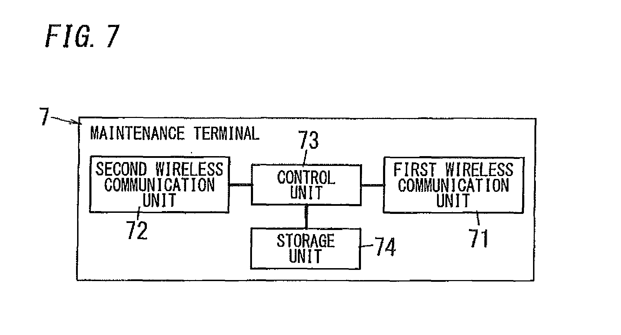

The relay device 7 relays, by wireless communication, the data that is transmitted or received between a communication device (slave 1, master 2) that is requested for meter reading data and the maintenance terminal 3. The relay device 7 is installed in the vicinity of a lobby of a housing complex, for example. The relay device 7 includes a first wireless communication unit 71, a second wireless communication unit 72, and a control unit 73, as shown in FIG. 7.

The first wireless communication unit 71 communicates wirelessly with the maintenance terminal 3 (refer to FIG. 6). Specifically, the first wireless communication unit 71 receives a data acquisition request signal addressed to a communication device from the maintenance terminal 3 by wireless communication. Also, when the second wireless communication unit 72 receives a data acquisition response signal that includes the meter reading data of a communication device from the communication device, the first wireless communication unit 71 transmits a data acquisition response signal that includes the meter reading data to the maintenance terminal 3 by wireless communication according to an instruction of the control unit 73.

The second wireless communication unit 72 communicates wirelessly with a communication device. Specifically, when the first wireless communication unit 71 receives a data acquisition request signal addressed to a communication device from the maintenance terminal 3, the second wireless communication unit 72 transmits a data acquisition request signal addressed to the communication device by wireless communication according to an instruction of the control unit 73. Also, the second wireless communication unit 72 receives a data acquisition response signal that includes the meter reading data of a communication device from the communication device by wireless communication.

The control unit 73, upon receiving a data acquisition request addressed to a communication device from the maintenance terminal 3, transmits a data acquisition request to the communication device. That is, the control unit 73 controls the second wireless communication unit 72 to transmit a data acquisition request signal addressed to the communication device to the communication device.

Also, the control unit 73, upon receiving a data acquisition response including meter reading data of a communication device from the communication device, transmits a data acquisition response to the maintenance terminal 3. That is, the control unit 73 controls the first wireless communication unit 71 to transmit a data acquisition response signal to the maintenance terminal 3.

A control unit 34 (refer to FIG. 2) of the maintenance terminal 3 according to the present embodiment transmits, to the relay device 7, a data acquisition request addressed to a communication device from a place where the control unit 34 can communicate with the relay device 7. That is, the control unit 34 controls a wireless communication unit 33 (refer to FIG. 2) to transmit a data acquisition request signal addressed to the communication device to the relay device 7. Note that description of functions similar to those of the maintenance terminal 3 according to Embodiment 1 will be omitted.

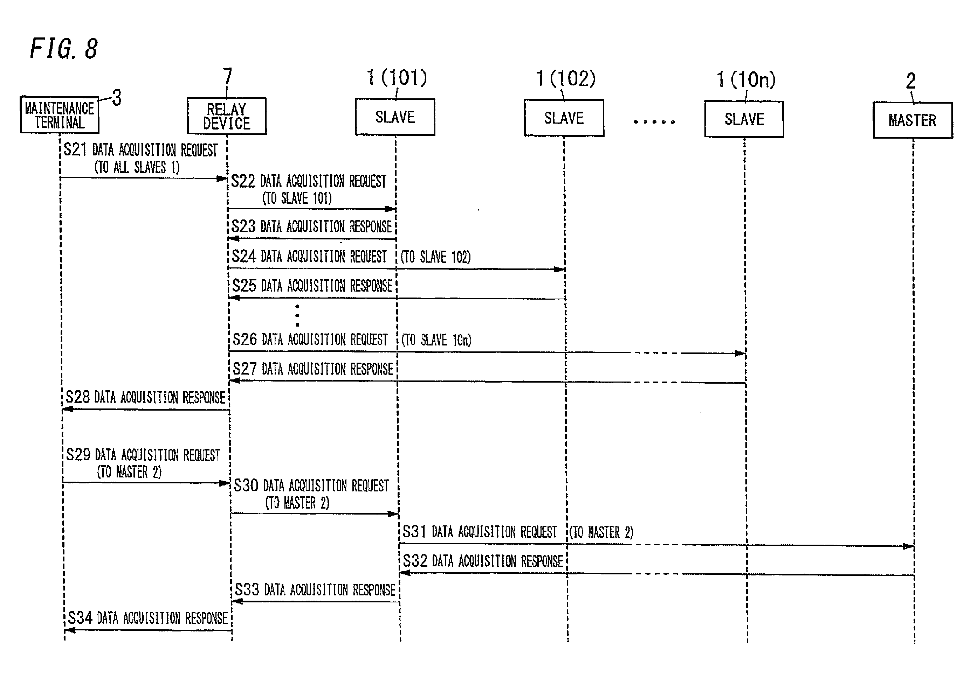

Next, meter reading operations by the maintenance terminal 3 in the communication system according to the present embodiment will be described with reference to FIG. 8. Here, the maintenance terminal 3 has been carried to a place where the maintenance terminal 3 cannot communicate directly with all of the slaves 1 but can communicate directly with the relay device 7. The maintenance terminal 3 has established communication with the relay device 7.

First, the maintenance terminal 3 transmits, to the relay device 7, a data acquisition request addressed to all the slaves 1 in order to acquire the meter reading data of the slaves 1 by wireless communication (S21). The relay device 7, upon receiving the data acquisition request with addressed to all the slaves 1 from the maintenance terminal 3, transmits a data acquisition request to a slave 101 by wireless communication (S22). The slave 101, upon receiving the data acquisition request from the relay device 7, transmits a data acquisition response including the meter reading data of the slave 101 to the relay device 7 by wireless communication (S23). Also, the relay device 7 transmits a data acquisition request to a slave 102 by wireless communication (S24). The slave 102, upon receiving the data acquisition request from the relay device 7, transmits a data acquisition response including the meter reading data of the slave 102 to the relay device 7 by wireless communication (S25). Furthermore, the relay device 7 transmits a data acquisition request to a slave 10n by wireless communication (S26). The slave 10n, upon receiving the data acquisition request from the relay device 7, transmits a data acquisition response including the meter reading data of the slave 10n to the relay device 7 by wireless communication (S27). The relay device 7 performs, with respect to an unshown slave 1, similar operations to those performed on the slave 10n, and the slave 1 performs similar operations to the slave 10n. The relay device 7, upon receiving data acquisition responses from all the slaves 1, transmits a data acquisition response including the meter reading data of all the slaves 1 to the maintenance terminal 3 by wireless communication (S28). Accordingly, an operation for acquiring meter reading data can be realized with respect to all the slaves 1 including slaves 1 that cannot communicate directly with the maintenance terminal 3.

Also, acquisition of meter reading data with respect to the master 2 can be realized in a similar manner as in the case of acquiring meter reading data with respect to all the slaves 1, as described below.

First, in order to acquire meter reading data held in the master 2, the maintenance terminal 3 transmits, to the relay device 7, a data acquisition request addressed to the master 2 by wireless communication (S29). The relay device 7, upon receiving the data acquisition request addressed to the master 2 from the maintenance terminal 3, transmits, to the slave 101, a data acquisition request addressed to the master 2 by wireless communication (S30). The slave 101, upon receiving the data acquisition request addressed to the master 2 from the maintenance terminal 3, transmits a data acquisition request addressed to the master 2 by power line communication (S31). The master 2, upon receiving the data acquisition request from the slave 101, transmits a data acquisition response including the meter reading data held in the master 2 to the slave 101 by power line communication (S32). The slave 101, upon receiving the data acquisition response from the master 2, transmits a data acquisition response including the meter reading data from the master 2 to the relay device 7 by wireless communication (S33). The relay device 7, upon receiving the data acquisition response from the slave 101, transmits a data acquisition response including the meter reading data from the master 2 to the maintenance terminal 3 by wireless communication (S34).

Note that an operation of acquiring maintenance data with respect to the slave 1 and the master 2 is similar to the operation in the case of acquiring meter reading data. Also, an operation of transmitting maintenance data from the maintenance terminal 3 to the slave 1 and the master 2 is also similar to the operation in the case of acquiring meter reading data.

The communication system according to the present embodiment described above includes the plurality of slaves 1, the master 2, the portable terminal device (maintenance terminal 3), and the relay device 7. The plurality of slaves 1 each acquire meter reading data. The meter reading data represents a consumption amount, by a customer facility, of a supply medium supplied by a supplier. The master 2 acquires meter reading data from each of the plurality of slaves 1 by wired communication. The portable terminal device transmits or receives data with at least a first communication device among the plurality of communication devices. The plurality of communication devices are the plurality of slaves 1 and the master 2. The relay device 7 relays, by wireless communication, the data that is transmitted or received between the portable terminal device and the target device.

The program according to the present embodiment is a program for causing a computer to function as means described below, the computer being used in the communication system that includes the plurality of slaves 1, the master 2, and the portable terminal device (maintenance terminal 3) configured to transmit or receive data with at least a target device among the plurality of communication devices. The plurality of communication devices are the plurality of slaves 1 and the master 2. The plurality of slaves 1 each acquire meter reading data. The meter reading data represents a consumption amount, by a customer facility, of a supply medium supplied from a supplier. The master 2 acquires meter reading data from the plurality of slaves 1 by wired communication. The means relays, by wireless communication, the data that is transmitted or received between the portable terminal device and the target device.

In the present embodiment, as described above, the maintenance terminal 3 and the target device (slave 1, master 2) can transmit or receive data as a result of the data being relayed by the relay device 7 that can perform wireless communication with the maintenance terminal (portable terminal device) 3 directly. Accordingly, compared with a case where a device that performs wired communication with the maintenance terminal 3 relays data, an operation from the maintenance terminal 3 with respect to a target device, that is, transmission or reception of data can be efficiently performed without going to the vicinity of the target device.

Note that the maintenance terminal 3 is not limited to transmitting, to the relay device 7, a data acquisition request addressed to all the slaves 1, and may transmit, to the relay device 7, a data acquisition request addressed to one slave 1. In this case, the relay device 7, upon receiving a data acquisition request addressed to the slave 1 from the maintenance terminal 3, transmits a data acquisition request to the slave 1, and receives a data acquisition response including the meter reading data of the slave 1 from the slave 1. Accordingly, the maintenance terminal 3 can acquire the meter reading data of the slave 1 via the relay device 7. In the case where acquiring meter reading data separately from the plurality of slaves 1 is desired, the above operation may be repeated for each of the slaves 1.

Also, in the case where a slave 1 (target slave 1) that cannot communicate wirelessly with the relay device 7 exists, the relay device 7 can transmit or receive data with the target slave 1 via another slave 1 that can communicate wirelessly with the relay device 7. In this case, the relay device 7 and the other slave 1 perform wireless communication, and the other slave 1 and the target slave 1 perform power line communication.

### Embodiment 3

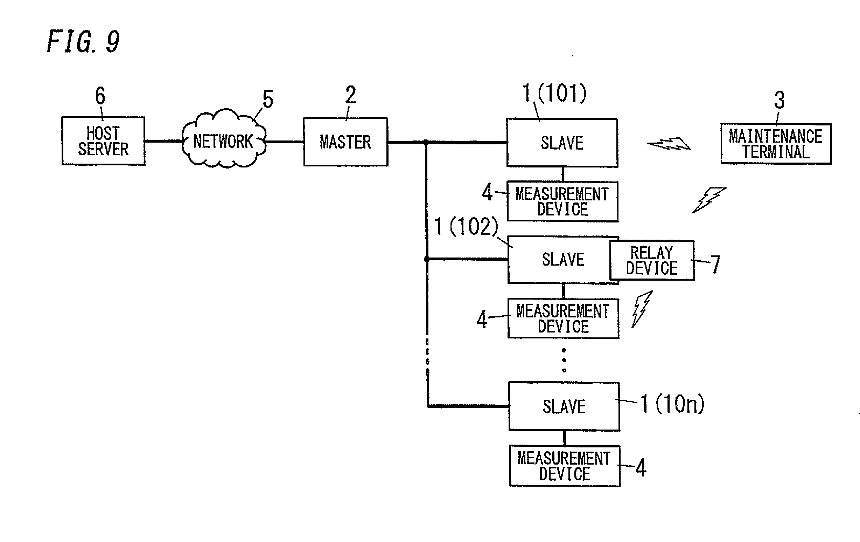

The communication system according to Embodiment 3 differs from the communication system (refer to FIG. 6) according to Embodiment 2 in that a relay device 7 is provided integrally with a slave 102, as shown in FIG. 9. Note that constituent elements similar to those in the communication system according to Embodiment 2 are provided with the same reference numerals, and description thereof will be omitted.

In the present embodiment, the slave 102 and the relay device 7 are integrated in consideration of the case where space for installing the relay device 7 is restricted, and a maintenance terminal 3 acquires, via the relay device 7, data from a slave 1 that cannot communicate directly with the maintenance terminal 3.

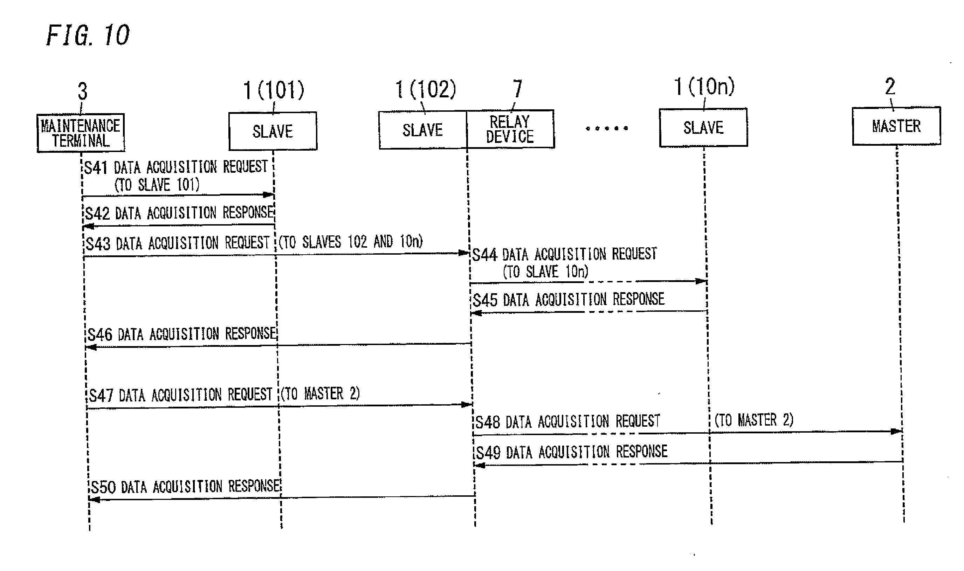

Next, meter reading operations by the maintenance terminal 3 in the communication system according to the present embodiment will be described with reference to FIG. 10. Here, the maintenance terminal 3 has been carried to a place where the maintenance terminal 3 cannot communicate directly with a slave 10n but can communicate directly with a slave 101 and the relay device 7. That is, the maintenance terminal 3 has established communication with the slave 101 and the relay device 7.

First, in order to acquire the meter reading data of the slave 101, the maintenance terminal 3 transmits a data acquisition request to the slave 101 by wireless communication (S41). The slave 101, upon receiving the data acquisition request from the maintenance terminal 3, transmits a data acquisition response including the meter reading data of the slave 101 to the maintenance terminal 3 by wireless communication (S42).

Next, in order to acquire the meter reading data of the slaves 102 and 10n, the maintenance terminal 3 transmits, to the relay device 7 of the slave 102, a data acquisition request to the slaves 102 and 10n by wireless communication (S43). The relay device 7, upon receiving the data acquisition request to the slaves 102 and 10n from the maintenance terminal 3, transmits a data acquisition request to the slave 10n by wireless communication (S44). The slave 10n, upon receiving the data acquisition request from the relay device 7, transmits a data acquisition response including the meter reading data of the slave 10n to the relay device 7 by wireless communication (S45). The relay device 7, upon receiving the data acquisition response from the slave 10n, transmits a data acquisition response including the meter reading data of the slaves 102 and 10n to the maintenance terminal 3 by wireless communication (S46).

Also, acquisition of meter reading data with respect to the master 2 can be realized in a similar manner as in the case of acquiring the meter reading data of the slave 10n, as described below.

First, in order to acquire meter reading data held in the master 2, the maintenance terminal 3 transmits, to the relay device 7, a data acquisition request to the master 2 by wireless communication (S47). When the relay device 7 receives the data acquisition request addressed to the master 2 from the maintenance terminal 3, the slave 102 that is integrated into the relay device 7 transmits a data acquisition request to the master 2 by power line communication (S48). The master 2, upon receiving the data acquisition request from the slave 102, transmits a data acquisition response including the meter reading data held in the master 2 to the slave 102 by power line communication (S49). When the slave 102 receives the data acquisition response from the master 2, the relay device 7 transmits a data acquisition response including the meter reading data from the master 2 to the maintenance terminal 3 by wireless communication (S50).

Note that an operation of acquiring maintenance data with respect to the slave 1 and the master 2 is similar to the operation in the case of acquiring the meter reading data of all the slaves 1. Also, an operation of transmitting maintenance data from the maintenance terminal 3 to the slave 1 and the master 2 is similar to the case of acquiring meter reading data.

It is preferable that the relay device 7 is integrally provided in a communication device (slave 102) that is different from a target device (slave 10n), as in the case of the communication system according to the present embodiment described above.

In the present embodiment, the maintenance terminal (portable terminal device) 3 can transmit or receive data with a target device (slave 10n) from a place where the maintenance terminal 3 can communicate directly with the relay device 7 that is integrally provided in another communication device (slave 102). Accordingly, an operation by the maintenance terminal 3 with respect to a target device can be performed more efficiently.

Note that a configuration in which the relay device 7 is integrally provided with the slave 102 (integrated configuration) is not limited to a configuration in which the relay device 7 and the slave 102 are integrated in a state of being housed in separate casings. For example, the integrated configuration may be a configuration in which a module having a function of relaying the data that is transmitted or received between the maintenance terminal 3 and a communication device (slave 1, master 2) is included in the slave 102. Also, the integrated configuration may be a configuration in which a program for causing the slave 102 to function as means for relaying the data that is transmitted or received between the maintenance terminal 3 and the communication device is stored in the slave 102.

### Embodiment 4

The communication system according to Embodiment 4 differs from the communication system according to Embodiment 2 in that a relay device 7 acquires meter reading data from each slave 1 in advance. Note that constituent elements similar to those in the communication system according to Embodiment 2 are provided with the same reference numerals, and description thereof will be omitted.

The relay device 7 according to the present embodiment acquires meter reading data held in each of the slaves 1, which are target devices, on a regular basis (every day, for example), and stores the data in a storage unit 74 (refer to FIG. 7). The relay device 7, upon receiving a data acquisition request addressed to a slave 1 from the maintenance terminal 3 (refer to FIG. 1), transmits a data acquisition response including the meter reading data held in the storage unit 74 to the maintenance terminal 3.

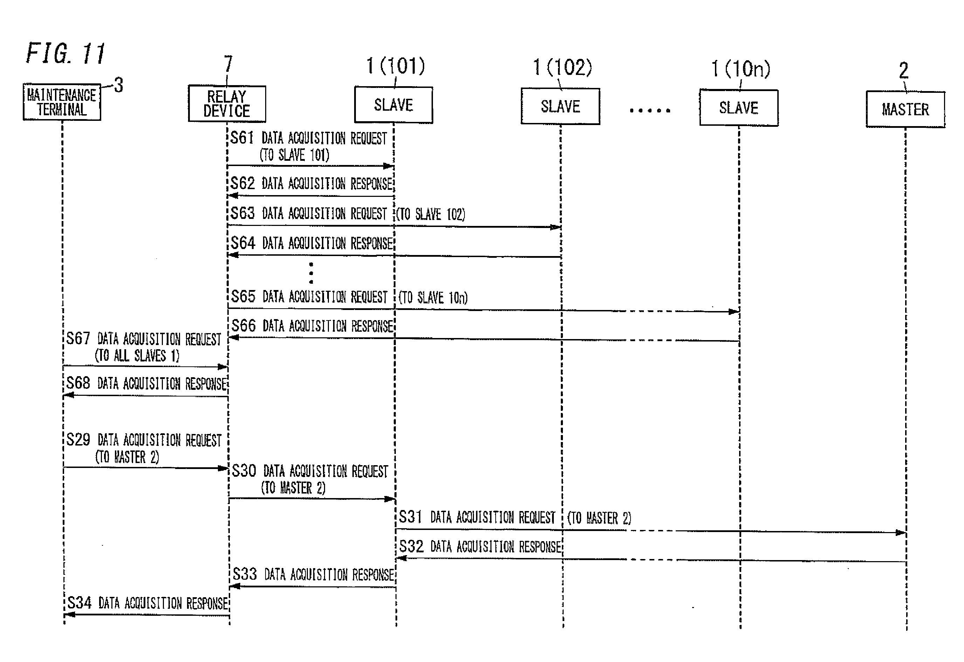

Next, meter reading operations by the maintenance terminal 3, in the communication system according to the present embodiment, will be described with reference to FIG. 11. Here, the maintenance terminal 3 has been carried to a place where the maintenance terminal 3 cannot communicate directly with all of the slaves 1 (10k) (k=1, 2, ..., n) but can communicate directly with the relay device 7. That is, the maintenance terminal 3 has established communication with the relay device 7.

First, the relay device 7 transmits a data acquisition request to the slave 101 by wireless communication (S61). The slave 101, upon receiving the data acquisition request from the relay device 7, transmits a data acquisition response including the meter reading data of the slave 101 to the relay device 7 by wireless communication (S62). Also, the relay device 7 transmits a data acquisition request to the slave 102 by wireless communication (S63). The slave 102, upon receiving the data acquisition request from the relay device 7, transmits a data acquisition response including the meter reading data of the slave 102 to the relay device 7 by wireless communication (S64). Furthermore, the relay device 7 transmits a data acquisition request to the slave 10n by wireless communication (S65). The slave 10n, upon receiving the data acquisition request from the relay device 7, transmits a data acquisition response including the meter reading data of the slave 10n to the relay device 7 by wireless communication (S66). The relay device 7 performs, with respect to an unshown slave 1, a similar operations to those performed on the slave 10n, and the slave 1 performs similar operations to the slave 10n. The communication system according to the present embodiment performs the operations of steps S61 to S66 on a regular basis (every day, for example). Thereafter, in order to acquire the meter reading data of all the slaves 1, the maintenance terminal 3 transmits, to the relay device 7, a data acquisition request addressed to all the slaves 1 by wireless communication (S67). The relay device 7, upon receiving data acquisition responses from all the slaves 1, transmits a data acquisition response including the meter reading data of all the slaves 1 to the maintenance terminal 3 by wireless communication (S68).

Note that since acquisition of meter reading data with respect to the master 2 is performed similarly to the case of Embodiment 2, description thereof will be omitted (steps S29 to S34 in FIG. 11).

Also, an operation of acquiring maintenance data of the slave 1 and the master 2 is also similar to the operation in the case of acquiring meter reading data. Furthermore, an operation of transmitting maintenance data from the maintenance terminal 3 to the slave 1 and the master 2 is also similar to the operation in the case of acquiring meter reading data.

It is preferable that the relay device 7 acquires data from a target device (each slave 1) on a regular basis and holds the data, and, upon receiving a request of acquiring the data from the portable terminal device (maintenance terminal 3), transmits the data held by the relay device 7 to the portable terminal device, as in the case of the communication system according to the present embodiment described above.

In the present embodiment, as described above, the relay device 7 acquires data from a target device (each slave 1) in advance. Accordingly, when the maintenance terminal (portable terminal device) 3 transmits a request to acquire data to each slave 1, the maintenance terminal 3 can acquire the data of the target device by communicating with only the relay device 7, and as a result, the data acquisition operation can be performed more efficiently.

Note that, as a modification of Embodiments 2 to 4, the communication system may include two or more relay devices 7. In the modification, the maintenance terminal 3 can transmit or receive data with a target slave 1 or the master 2 via the two or more relay devices 7.

Although the present invention has been described with reference to a certain preferred embodiment, numerous modifications and variations can be made by those skilled in the art without departing from the true spirit and scope of this invention, namely claims.

## Claims

1. A communication system comprising:
a plurality of slaves each configured to acquire meter reading data that represents a consumption amount, by a customer facility, of a supply medium supplied from a supplier;
a master configured to acquire the meter reading data from each of the plurality of slaves by wired communication; and
a portable terminal device configured to transmit or receive data with at least a first communication device among a plurality of communication devices comprising the plurality of slaves and the master,
in a case where the portable terminal device and the first communication device transmit or receive data, a second communication device that is different from the first communication device among the plurality of communication devices being configured to relay the data that is transmitted or received between the portable terminal device and the first communication device, by communicating with the first communication device using a wired communication network established between the plurality of communication devices, and by communicating with the portable terminal device wirelessly.

2. A communication system comprising:
a plurality of slaves each configured to acquire meter reading data that represents a consumption amount, by a customer facility, of a supply medium supplied from a supplier;
a master configured to acquire the meter reading data from each of the plurality of slaves by wired communication;
a portable terminal device configured to transmit or receive data with at least one target device among a plurality of communication devices comprising the plurality of slaves and the master; and
a relay device configured to relay the data that is transmitted or received between the portable terminal device and the target device by wireless communication.

3. The communication system according to claim 2, wherein the relay device is integrally provided to another communication device that is different from the target device.

4. The communication system according to claim 2 or 3, wherein the relay device is configured to acquire data from the target device on a regular basis and hold the data, and, upon receiving a request of acquiring the data from the portable terminal device, transmit the held data to the portable terminal device.

5. The communication system according to any one of claims 1 to 4, wherein the supply medium is electric power.

6. The communication system according to claim 5, wherein each of the plurality of slaves constitutes a power meter with a measurement device configured to measure an electric power consumption amount by the customer facility.

7. A communication device that is used as any of the plurality of communication devices in the communication system according to any one of claims 1 to 6.

8. A relay device that is used in the communication system according to any one of claims 2 to 6.

9. A program for a computer that, in a communication system comprising a plurality of slaves each configured to acquire meter reading data that represents a consumption amount, by a customer facility, of a supply medium supplied from a supplier; a master configured to acquire the meter reading data from each of the plurality of slaves by wired communication; and a portable terminal device configured to transmit or receive data with at least a first communication device among a plurality of communication devices comprising the plurality of slaves and the master, is used as a second communication device that is different from the first communication device among the plurality of communication devices,
the program causing the computer to function as, in a case where the portable terminal device and the first communication device transmit or receive data, a means for relaying data that is transmitted or received between the portable terminal device and the first communication device, by communicating with the first communication device using a wired communication network established between the plurality of communication devices, and by communicating with the portable terminal device wirelessly.

10. A program for a computer that is used in a communication system comprising: a plurality of slaves each configured to acquire meter reading data that represents a consumption amount, by a customer facility, of a supply medium supplied from a supplier; a master configured to acquire the meter reading data from each of the plurality of slaves by wired communication; and a portable terminal device configured to transmit or receive data with at least one target device among a plurality of communication devices comprising the plurality of slaves and the master, the program causing the computer to function as means for relaying the data that is transmitted or received between the portable terminal device and the target device by wireless communication.
